(19) Europäisches Patentamt

European Patent Office

Office européen des brevets

(11) **EP 2 575 276 B1**

(12) **EUROPEAN PATENT SPECIFICATION**

(45) Date of publication and mention
of the grant of the patent:
**10.08.2016  Bulletin 2016/32**

(51) Int Cl.:
***H04J 14/02*** *(2006.01)*

(21) Application number: **11290453.7**

(22) Date of filing: **30.09.2011**

(54) **Integrated node architecture for optical packet rings**

Integrierte Knotenarchitektur für optische Paketringe

Architecture de noeud intégré pour bagues de paquets optiques

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**03.04.2013  Bulletin 2013/14**

(73) Proprietor: **ALCATEL LUCENT
92100 Boulogne-Billancourt (FR)**

(72) Inventors:
• **Simonneau, Christian
94800 Villejuif (FR)**
• **Vacondio, Francesco
75014 Paris (FR)**
• **Pointurier, Yvan
91300 Massy (FR)**

• **Bigo, Sébastien
91300 Massy (FR)**

(74) Representative: **Wetzel, Emmanuelle et al
Alcatel-Lucent
Intellectual Property Business Group
70430 Stuttgart (DE)**

(56) References cited:
**JP-A- 2002 319 896     US-A1- 2006 024 066**

• **ROBERTS G F ET AL: "Integrated SOA based
add-drop multiplexer for WDM optical packet
roating with reduced distortion penalty",
LASERS AND ELECTRO-OPTICS, 2004. (CLEO).
CONFERENCE ON SAN FRANCISCO, CA, USA
MAY 20-21, 2004, PISCATAWAY, NJ, USA,IEEE,
vol. 1, 17 May 2004 (2004-05-17), pages 883-884,
XP010745405, ISBN: 978-1-55752-777-6**

**Description**

The present document relates to packet optical telecommunication networks. In particular, the present document relates to packet optical add drop multiplexers.

The deployment of fiber-to-the-home (FTTH) technology in access networks is creating new demands on metropolitan area and backbone networks. The increasing bit rate per user and the simplification of access networks will make the traffic profile more bursty, requiring new flexible techniques at the metropolitan area network for transmitting and distributing such bursty traffic. As such, there is a need for a cost efficient optical add drop multiplexer which is adapted to bursty traffic profiles and which allows for the adding and dropping of optical signals on a fine granularity, e.g. on the granularity of optical packets.

The present document relates to packet optical add-drop multiplexer (POADM) nodes which may be used in optical networks for adding and dropping optical packets from and to multiple wavelength signals, such as WDM (wavelength division multiplex) signals. In particular, the present document describes architectures of POADM nodes, which allow for an efficient and cost-effective integration of the elements of the POADM nodes.

US2006/024066 describes an optical modulation apparatus for implementing a stable amplifying function. Roberts et al.:"Integrated SOA based add-drop multiplexer for WDM optical packet routing with reduced distortion penalty", Lasers and Electro-optics, 2004, IEEE, vol. 1, 17 May 2004, pp. 883-884 describes a monolithic two-input, two-output add-drop multiplexer. JP2002 319896 describes an optical packet withdrawal/insertion method and device.

According to an aspect, a packet optical add drop multiplexer (POADM) or a component for a POADM, is described. In the following, reference is only made to a POADM for reasons of conciseness. The disclosure is equally applicable to a component or a system for a POADM.

In an embodiment, the POADM comprises a de-multiplexer / multiplexer unit configured to de-multiplex an optical signal propagating in a first direction from an optical multiple wavelength signal propagating in the first direction. In the other (opposite) propagation direction, the de-multiplexer / multiplexer unit is configured to multiplex an optical signal propagating in the second direction into an optical multiple wavelength signal propagating in the second direction. As an alternative to the terms "first direction" and "second direction", the terms "downstream direction" and "upstream direction" are used in the present document, wherein the upstream direction is the opposite or reverse direction to the downstream direction.

Furthermore, the POADM comprises an optical gate which is positioned downstream of the de-multiplexer / multiplexer unit. The optical gate is configured to erase light within a pre-determined time interval from the optical signal propagating in the first and the second direction. In particular, the optical gate may be configured to erase or remove an optical packet from the optical signal. In addition, the POADM comprises a reflector which is positioned downstream of the optical gate. The reflector is configured to convert or to reflect the optical signal propagating in the first direction to the optical signal propagating in the second direction.

This means that the optical signal propagating in the first direction typically differs from the optical signal propagating in the second direction only with regards to the direction of propagation. In other words, the optical signal propagating in the first direction and the optical signal propagating in the second direction are typically the same, apart from opposite directions of propagation. Signal polarization in first and second direction may be different due to the reflection.

In a similar manner, this means that the multiple wavelength signal propagating in the first direction and the multiple wavelength signal propagating in the second direction mainly differ in the direction of propagation. Apart from that, both multiple wavelength signals comprise the same optical signal and typically only differ in that the optical signal within the multiple wavelength signal propagating in the second direction comprises one or more optical holes or voids at one or more pre-determined time instants.

As such, the de-multiplexer / multiplexer unit isolates the optical signal which propagates in the first direction from the multiple wavelength signal (e.g. a wavelength division multiplex (WDM) signal). The optical signal may be a single wavelength signal, i.e. an optical signal comprising a single carrier wavelength. The isolated optical signal may be transmitted by a waveguide of the POADM from the de-multiplexer / multiplexer unit to the optical gate. The optical gate is configured to remove light during one or more pre-determined time intervals from the optical signal, thereby creating an optical signal which comprises optical holes or voids at the one or more pre-determined time intervals. These optical holes may be filled with optical packets, thereby providing an optical packet adding functionality. Such adding of optical packets is typically performed on the multiple wavelength signal propagating in the second direction.

It should be noted that the POADM described in the present document is applicable to synchronous or asynchronous packet switching. In case of synchronous packet switching, all the optical packets have the same duration and are transmitted synchronously on all wavelengths, such that the optical packets arrive substantially at the same time on all wavelengths at the POADM nodes on the ring. In case of asynchronous packet switching, the optical packets may be of variable-length and may arrive randomly at a POADM node. As such, the one or more pre-determined time intervals may be time intervals on a regular and fixed time grid (in case of synchronous packet switching) or may be time intervals of arbitrary length and/or at arbitrary time instants (in case of asynchronous packet switching).

After having traversed the optical gate, the optical signal is reflected and therefore re-traverses the optical gate in the second direction. As a result of traversing the optical gate twice, the extinction ratio of the light at the one or more pre-determined time intervals from the optical signal is typically increased. After having traversed the optical gate in the second direction, the optical signal is multiplexed (using the de-multiplexer / multiplexer unit) into the multiple wavelength signal which propagates in the second direction.

From a structural point of view, the POADM may be described as having a first end (e.g. a front end) and a second end (e.g. a rear end), wherein the second end is opposite of the first end. The de-multiplexer / multiplexer unit may be positioned at the (or towards the) first end of the POADM and the reflector may be positioned at the (or towards the) second end of the POADM. The optical gate is positioned between the de-multiplexer / multiplexer unit and the reflector. The waveguide which typically carries the optical signal in the first direction and the optical signal in the second direction is also positioned between the de-multiplexer / multiplexer unit and the reflector and typically traverses the optical gate.

The optical gate may be configured to switch between a first state and a second state on a per optical packet basis. In the first state the optical signal (in the first and/or second direction) traverses the optical gate substantially unmodified, i.e. in the first state the optical gate is open. In the second state the optical signal is substantially erased, i.e. in the second state the optical gate is closed. It should be noted that the optical gate may have an additional amplification functionality. In this case, the optical gate may be configured to amplify the optical signal (in the first and/or second direction) in the first state. Alternatively or in addition, the optical gate may have a splitting (or decoupling) functionality. By way of example, the optical gate may be a 1 x 2 switch. In this case, a fraction of the optical signal (e.g. 80% or 90%) may traverse the optical gate substantially unmodified, when the optical gate is in the first state.

As already indicated above, the optical signals typically comprise a reduced number of wavelengths compared to the multiple wavelength signal. In particular, the optical signals may be single wavelength signals comprising only a single carrier wavelength.

The POADM may comprise an input/output interface which is positioned upstream of the de-multiplexer / multiplexer unit. In other words, the input/output interface may be positioned between the first end of the POADM and the de-multiplexer / multiplexer unit. The input/output interface is configured to transmit the optical multiple wavelength signal propagating in the first and in the opposite second direction. The input/output interface may be implemented as a fiber pigtail of an integrated circuit (IC) which comprises e.g. the de-multiplexer / multiplexer unit, one or more optical gates and one or more corresponding reflectors.

As already indicated above, the POADM may comprise an optical waveguide traversing the optical gate. The optical waveguide is typically configured to transmit the optical signal propagating in the first direction from the de-multiplexer / multiplexer unit to the reflector and to transmit the optical signal propagating in the second direction from the reflector to the de-multiplexer / multiplexer unit. The reflector may be implemented by a change in the refractive index of the waveguide at a remote end of the waveguide (e.g. at the second end of the POADM) opposite of the de-multiplexer / multiplexer unit.

In a preferred embodiment, the POADM or the component of the POADM is implemented using silicon photonics technology. As such, the de-multiplexer / multiplexer unit, the one or more optical gates, the one or more corresponding waveguides and the one or more corresponding reflectors may be integrated on a common integrated circuit. In particular, the above mentioned elements may be implemented on a common Silicon-on-isolator (SOI) substrate.

Typically, the de-multiplexer / multiplexer unit is configured to de-multiplex a plurality of optical signals (e.g. a plurality of single wavelength signals) propagating in the first direction from the optical multiple wavelength signal propagating in the first direction. In the same manner, the de-multiplexer / multiplexer unit may be configured to multiplex the plurality of optical signals (e.g. the plurality of single wavelength signals) propagating in the second direction into the optical multiple wavelength signal propagating in the second direction. In such cases, the POADM typically comprises a plurality of optical gates, a plurality of waveguides and a plurality of reflectors for the plurality of optical signals.

In a particular embodiment, the optical gate is a 1 x 2 switch configured to decouple a fraction of the optical signals propagating in the first direction and/or propagating in the second direction from the optical signals propagating within the waveguide. In this case, the POADM may comprise an optical receiver configured to convert the decoupled fraction of the optical signal into an electrical signal. In particular, the optical receiver may be integrated on the same integrated circuit as the optical gate, the de-multiplexer / multiplexer unit and the reflector. As such, the optical receiver in combination with the 1x2 switch may provide a drop functionality of the POADM.

The POADM may comprise a polarization rotator which is positioned downstream of the optical gate and upstream of the reflector. In other words, the polarization rotator may be positioned between the optical gate and the reflector. The polarization rotator may be used to compensate for polarization dependent performance characteristics (e.g. polarization dependent loss) of the optical gate and/or the de-multiplexer / multiplexer unit. In order to achieve this, the polarization rotator may be configured to rotate a polarization of the optical signal propagating in the first direction by substantially 45° degrees, and rotate a polarization of the optical signal propagating in the second direction by substantially 45° degrees. In more general terms, the reflector may be configured to perform a polarization rotation of the optical signal of *a*, wherein *a* may be e.g. 180°. In this case, the polarization rotator may be configured to rotate a polarization of the optical signal propagating in the first direction by substantially

(90°-*a*)/2 degrees, and rotate a polarization of the optical signal propagating in the second direction by substantially (90°-*a*)/2 degrees. More generally, it may be stated that the polarization rotator may be adapted to rotate the polarization of the optical signal propagating in the first direction and the polarization of the optical signal propagating in the second direction by a total of substantially 90°-*a* degrees. In yet more general terms, the polarization rotator and the reflector may be configured to rotate an electrical field (e.g. the optical signal), such that two polarisation components of the electrical field entering the polarisation rotator in the first direction are exchanged when reflected back through the polarization rotator in the second direction. By exchanging the polarization components, the polarization effects sustained in the optical gate may be cancelled (or both polarization components of the optical signal may sustain the same impairments). Mathematically, Jones matrices of the polarization rotator and the reflector may be denoted by J_rot and J_ref, respectively. Then the polarization rotator and the reflector may be configured such

$$\text{that} \quad \text{J\_rot} * \text{J\_ref} * \text{J\_rot} = \begin{bmatrix} 0 & 1 \\ 1 & 0 \end{bmatrix}, \quad \text{i.e. a 2x2}$$

matrix where the 1st row is [0 1] and the second row is [1 0].

It should be noted that the polarization rotator and the reflector may be combined into a single device, referred to as a Faraday rotator. The Faraday rotator may be configured to reflect the optical signal propagating in the first direction and at the same time apply a rotation of substantially 90° degrees to the reflected optical signal.

As outlined above, the POADM may comprise only a single input/output interface (e.g. a single fiber pigtail) to transmit the multiple wavelength signal which propagates in the first and the (opposite) second direction. In particular, an integrated component of the POADM comprising e.g. the de-multiplexer / multiplexer unit, the one or more waveguides, the one or more optical gates and the one or more reflectors, may comprise only a single input/output interface. In order to separate the multiple wavelength signals propagating in opposite directions, the POADM may comprise a circulator. The circulator may be configured to direct the multiple wavelength signal propagating in the first direction from an input fiber to the de-multiplexer / multiplexer unit. On the other hand, the circulator may be configured to direct the multiple wavelength signal propagating in the (opposite) second direction from the de-multiplexer / multiplexer unit to an output fiber. For this purpose, the circulator may be positioned between the input fiber and the output fiber on one side and the single input/output interface on the other side.

The add and/or drop functionality of the POADM may be provided on the input fiber and/or the output fiber. For this purpose, the POADM may comprise an optical coupler configured to decouple a fraction of the multiple wavelength signal propagating in the first direction from the input fiber, and thereby provide a drop functionality. The optical coupler for decoupling may be positioned on the input fiber. Alternatively or in addition, the POADM may comprise an optical coupler configured to couple light at the pre-determined time interval into the multiple wavelength signal propagating in the second direction on the output fiber, and thereby provide an add functionality on a packet granularity. The optical coupler for coupling may be positioned on the output fiber. In order to cope with the different wavelengths comprised within the multiple wavelength signal, the POADM typically makes use of a fast tunable laser to generate light at the wavelength of the optical signal from which light has been erased at the pre-determined time interval. As such, the optical hole in the optical signal, which has been generated by the optical gate, can be filled using the optical coupler on the output fiber.

The POADM may further comprise an optical amplifier, e.g. an Erbium doped fiber amplifier (EDFA) configured to amplify the multiple wavelength signal propagating in the first direction on the input fiber. The optical amplifier is typically positioned upstream of the optical coupler for decoupling a fraction of the multiple wavelength signal from the input fiber. Alternatively or in addition, the POADM may comprise an optical amplifier (e.g. an EDFA) configured to amplify the multiple wavelength signal propagating in the second direction on the output fiber. Typically, the optical amplifier is positioned downstream of the coupler which couples optical packets into the multiple wavelength signal on the output fiber. This ensures that the multiple wavelength signal which is amplified comprises a continuous stream of optical packets, thereby enabling the use of conventional amplifiers such as EDFAs.

The multiple wavelength signal propagating in the first direction may be a polarization multiplexed multiple wavelength signal comprising a first multiple wavelength signal in a first polarization and a second multiple wavelength signal in a second polarization. The first and second polarizations may be orthogonal with respect to one another. In this case, the POADM may comprise a polarization de-multiplexer upstream of the de-multiplexer / multiplexer unit, e.g. on the input fiber upstream of the circulator, in particular upstream of the coupler on the input fiber. The polarization de-multiplexer may be configured to de-multiplex the first and the second multiple wavelength signal propagating in the first direction from the polarization multiplexed multiple wavelength signal propagating in the first direction. As indicated above, the first and second multiple wavelength signal propagating in the first direction may have polarizations which are orthogonal with respect to one another.

The POADM may comprise a first sub-POADM for the first multiple wavelength signal and a second sub-POADM for the second multiple wavelength signal. The first and second sub-POADMs may comprise any of the POADM features outlined in the present document. In particular, the first and second sub-POADMs may each comprise a de-multiplexer / multiplexer unit, one or more waveguides, one or more optical gates and one or more reflectors. Even more particularly, the POADM may be configured to perform the add/drop functionality separately for the two polarizations of the polarization multiplexed multiple wavelength signal using the first and second sub-POADMs.

Furthermore, the POADM may comprise a polarization multiplexer configured to multiplex a first and a second multiple wavelength signal propagating in the second direction. The polarization multiplexer may be positioned upstream of the de-multiplexer / multiplexer unit, e.g. on the output fiber upstream of the circulator, in particular upstream of the coupler on the output fiber.

It should be noted that the methods and systems including its preferred embodiments as outlined in the present document may be used stand-alone or in combination with the other methods and systems disclosed in this document. Furthermore, all aspects of the methods and systems outlined in the present document may be arbitrarily combined. In particular, the features of the claims may be combined with one another in an arbitrary manner.

The invention is explained below in an exemplary manner with reference to the accompanying drawings, wherein

Fig. 1 shows an example architecture of a packet optical add drop multiplexer (POADM);
Fig. 2 illustrates an example architecture of a POADM with a packet drop external to an integrated node of the POADM;
Fig. 3 shows an example architecture of a POADM with an integrated node having a single input / output interface;
Fig. 4 illustrates an example architecture of a POADM with an integrated node comprising integrated optical receivers; and
Fig. 5 shows an example architecture of a POADM comprising polarization rotators.

The expected traffic profile evolution generated by a next generation of high bit rate PONs (Passive Optical Networks) raises the issue of aggregation efficiency in the optical access and metropolitan network. By adopting a packet granularity in the access and metro area, the effective fill ratio of the resources is increased. In other words, by allowing the adding and dropping of optical signals on the granularity of an optical packet, the overall network capacity can be used more efficiently. In addition, the latency requirements imposed by real-time applications place constraints on the use of large buffers at the aggregation interface to smooth the traffic profile. In order to address these traffic challenges a packet ring network comprising packet optical add/drop multiplexer (POADM)-based ring nodes may be employed. The choice of the POADM technology is motivated by the combined benefit of packet granularity to optimize traffic management and optical transparency to de-correlate the ring capacity from the node capacity.

Within the packet ring network, one may distinguish between the optical transmission ring and its interfaces, called packet OADMs (POADM), which bridge the ring and the legacy interfaces. A packet OADM can process the incoming traffic at three levels: (a) at a Drop level, where only the packets which are to be extracted will be processed in the electronic part of the POADM node; (b) at a Transit level, where all the packets cross the POADM node transparently and some of them can be discarded depending on a scheduler algorithm of the POADM; and (c) at an Add level, where a new packet can be inserted onto any wavelength of the network.

In order to allow for the transmission of optical packets, an optical packet format may be defined. The optical packets are typically created in the adaptation layer of the electronic interface of a POADM node. The optical packets may have a fixed duration including a guard band, a preamble (for clocking purposes), a synchronization word (for phase control purposes), and a payload. Dummy packets may be generated and interleaved with useful packets to create a continuous packet stream as in asynchronous transfer mode (ATM) technology. By maintaining a continuous packet stream, it is possible to use typical erbium doped fiber amplifiers (EDFAs) already used for synchronous optical transmission systems. Typical packet durations may be in the range of $2\mu s$ to $10\mu s$.

Optical packets are typically associated with packet headers which comprise control (e.g. routing) information. The headers are generally attached to the payloads. However, in order to achieve optical transparency for a large fraction of the packets while maintaining visibility into all incoming traffic, an efficient solution may be to encode the headers of the optical packets on a separate wavelength. By way of example, the headers of the optical packets may be encoded into interval times and concatenated to create control packets transported on a separate wavelength. The control packets may be sent synchronously with the corresponding optical packets comprising the payload and the control packets may be regenerated at each POADM node. Thus, the control packets experience a point-to-point optical connection between two consecutive nodes. This ensures robustness, since the headers do not suffer from the degradation of the signal quality that could be caused by a lack of optical transparency when the optical signal passes through a large number of optical nodes (e.g. POADM nodes).

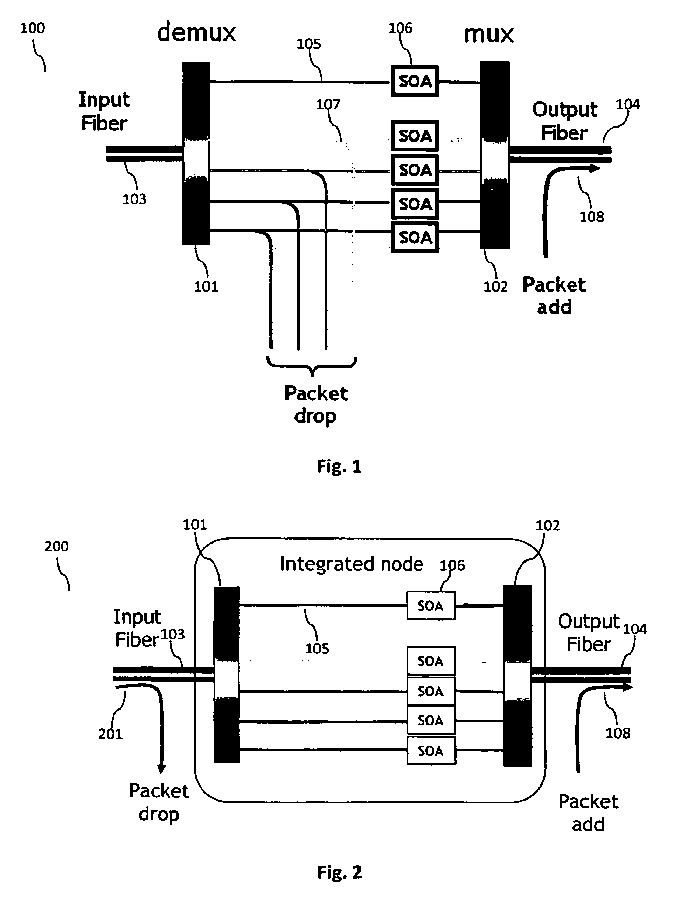

The packet OADM structure may be designed to support some or all of the network requirements described above. Some of the components of a POADM are illustrated in Fig. 1. As such, a packet OADM node 100 may comprise

- an optical amplifier at the input and/or at the output to manage the power budget and enable the cascade of several OADM nodes. The optical amplifiers may be applied to the multiple wavelength signals on the input fiber 103 and/or on the output fiber 104 of the POADM, e.g. using an EDFA. These optical amplifiers are not shown in Fig. 1.
- an optical demultiplexer 101 and an optical multiplexer 102, wherein the demultiplexer 101 is configured to isolate the wavelengths comprised within the multiple wavelength signal from the input fiber 103 and wherein the multiplexer 102 is configured to merge the individual wavelengths into a multiple wavelength signal on the output fiber 104 of the POADM 100. In other words, the demultiplexer 101 separates some or all of the wavelengths in the multiple wavelength signal onto separate fibers 105 and the multiplexer 103 performs the inverse operation.
- a set of optical gates 106 (one per fiber 105, e.g. one per wavelength) for amplification, real-time packet management, and fast packet power equalization, and
- optical couplers for the extraction and re-insertion of the control packet (which may be transmitted on a dedicated wavelength), couplers 107 for the drop, and couplers 108 for the add of optical packets.

The incoming data packets and the control channel are typically pre-amplified at the input of the POADM with an erbium doped fiber amplifier. The control channel is then extracted for separate processing. In parallel, the data packets are de-multiplexed optically in de-multiplexer 101. The wavelengths which are not processed at the packet level can bypass the packet OADM, i.e. the de-multiplexer 101 may only de-multiplex a fraction of the wavelengths comprised within the multiple wavelength signal, wherein the remaining wavelengths may bypass the POADM. At each output of the optical de-multiplexer 101, an optical coupler 107 may be used for extracting a part of the optical signal on a respective waveguide 105, e.g. a fiber. The extracted optical signal comprising a plurality of optical packets may be sent to a burst-mode receiver in order to detect some or all of the optical packets. Alternatively, the extracted optical signal may be transmitted to another optical node. The semiconductor optical amplifiers (SOA) 106 shown in Fig. 1 are used as an amplifier and as an optical gate which lets through or which erases individual optical packets. An optical multiplexer 102 at the output of the SOAs 106 recombines the optical channels from the plurality of fibers 105. At the output of the optical multiplexer 102, two optical couplers may be used, a first coupler 108 used to insert a new packet and a second coupler (not shown) used to insert the control channel, before an EDFA (not shown) may boost the WDM signal.

The architecture of the POADM 100 shown in Fig. 1 has various shortcomings. The integration of the SOA gates 106 built with III-V semiconductors (e.g GaAs semiconductors) is technologically challenging. In addition, when designing an integrated POADM module using the architecture depicted in Fig. 1, such POADM module would have a high number of fiber connections (1 input fiber 103, 1 output fiber 104, 1 pigtail per wavelength i. e. a total of 10 fiber connections for 8 WDM channels). This is detrimental for the integration of the POADM into a module, since the cost of the packaging (which amounts to up to 90% of the total module cost) is typically very sensitive to the number of fiber pigtails connected to the module.

In view of the above, it is beneficial to provide a POADM architecture which reduces the number of fiber connections. A possible approach is illustrated in Fig. 2. In the architecture 200 shown in Fig. 2, the couplers 107 used for dropping the plurality of individual wavelengths is moved upstream of the de-multiplexer 101, and is replaced by a single coupler 201 used for dropping the multiple wavelength signal. As such, the number of fiber pigtails has been reduced from one pigtail per wavelength to only a single pigtail for all wavelengths. A coherent optical receiver comprising a local oscillator may be used to extract the desired wavelength from the multiple wavelength signal carried on the single pigtail. In particular, the local oscillator of a coherent receiver may be tuned to a particular one of the wavelengths comprised within the multiple wavelength signal.

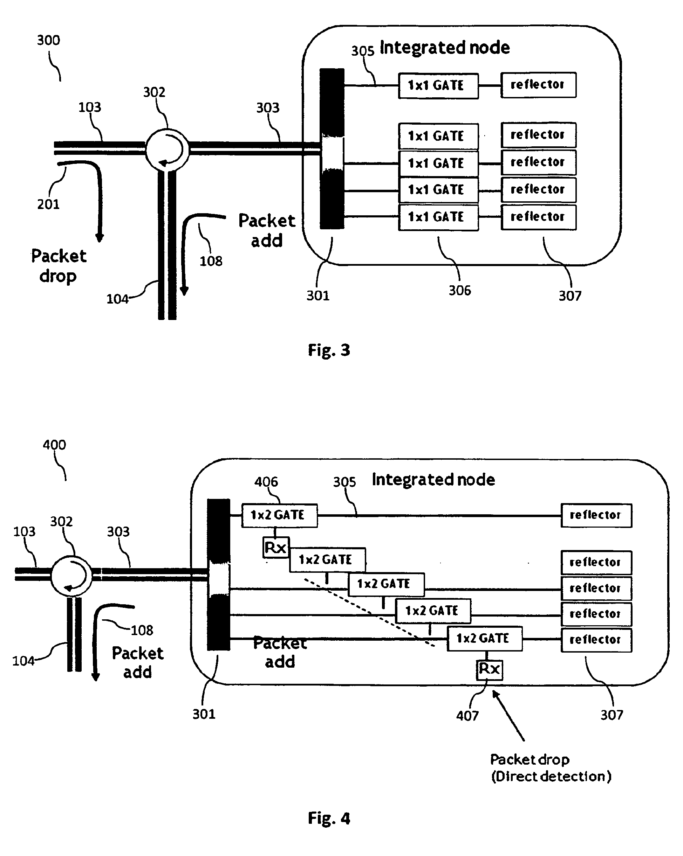

An approach to further reduce the number of fiber connections of a POADM module is illustrated in Figs. 3 and 4. It is proposed to use reflectors 307 at one end of the POADM structure 300, 400. The reflectors 307 are typically provided for all of the individual wavelengths, i.e. for each waveguide 305 a corresponding reflector 307 is provided. The reflectors 307 are configured to reflect the single wavelength signal on the individual waveguide 305 back to a fiber 303 which has the function of an input and an output to the integrated POADM node. As such, a POADM module according to the architecture 300 of Fig. 3 only requires a single fiber interface 303 which is used as an input and as an output. A further advantage of using the reflectors 307 is that the integrated module only requires a single de-multiplexer / multiplexer component 301.

The functionality of a POADM using the architecture 300 of Fig. 3 can be described as follows: Using an optical coupler 201 on the fiber 103 a fraction of the multiple wavelength signal may be dropped. The multiple wavelength signal traverses a circulator 302 to enter an integrated component of the POADM via the input/output fiber 303 of the integrated node. The de-multiplexer / multiplexer 301 isolates the individual wavelengths and provides single wavelengths signals on the plurality of waveguides 305. A plurality of optical gates 306 is used to suppress or erase individual optical packets from the corresponding plurality of single wavelength signals, thereby yielding a plurality of single wavelength signals from which one or more optical packets have been erased. If no packet needs to be added on a given wavelength, then the corresponding gate 306 lets the packet go through. Subsequently, the plurality of single wavelength signals on the waveguides 305 is reflected using a corresponding plurality of reflectors 307. The reflected single wavelength signals re-traverse the optical gates 306, thereby improving the extinction ratio of the suppressed optical packets. In other words, as the single wavelength signals on the waveguides 305 traverse the optical gates 306 twice, the degree of removal of the optical packets is improved.

Using the de-multiplexer / multiplexer 301 the plurality of reflected single wavelength signals on the waveguides 305 is merged into a multiple wavelength signal which comprises empty packet locations at various wavelengths. The outgoing multiple wavelength signal traverses the circulator 302 which directs the signal to an output fiber 104. Using an optical coupler 108 on the output fiber 104, new optical packets may be added to fill the empty packet locations of the multiple wavelength signal.

In other words, in the architecture 300 of Fig. 3 a splitter or coupler 201 is used to drop a fraction (e.g. 10 or 20%) of the multiple wavelength signal on fiber 103. One or more (coherent) receivers are located after this splitter or coupler 201 (not shown) in order to isolate one or more single wavelength signals from the multiple wavelength signal. The other fraction (e.g. 90 or 80%) of the WDM (or multiple wavelength) signal enters the de-multiplexer 301 (after transiting in a circulator 302). Downstream of the demultiplexer 301, each single wavelength signal is sent to an optical gate 306. This gate 306 erases a packet of the single wavelength signal if another packet is to be added on the same wavelength. If no packet needs to be added on a given wavelength then the corresponding gate 306 lets the packet go through. The signal is then reflected back (upstream) to the de-multiplexer 301 (used as a multiplexer) and the circulator 302. Packets to be added are inserted via the output fiber 104 such that packets are inserted only on those wavelengths where the gate 306 has erased the light.

The principles of the architecture 400 of the POADM of Fig. 4 are the same as those of the architecture 300 of Fig. 3. However, 1x2 switches 406 are used instead of 1x1 gates 306. Consequently, packet drop may be done using the 1x2 switches 406. In this case, it may be beneficial to integrate (direct detection) receivers 407 onto the same module or chip as the gates 406, reflectors 307 and the demultiplexer / multiplexer 301.

In both architectures 300, 400 shown in Figs. 3 and 4 only one fiber 303 needs to be pigtailed to the integrated node, thereby reducing the cost of the integrated node. The architecture 300 of Fig. 3 is adapted for coherent reception technology and the architecture 400 of Fig. 4 is adapted for direct detection technology.

It should be noted that the use of a polarization diversity scheme (e.g. polarization division multiplexing, PDM) is not illustrated in the Figs. 3 and 4. A possible implementation of PDM is to separate the two polarizations of an incoming PDM signal at the input of the de-multiplexer 301. Subsequently, the displayed schemes of Figs. 3 and 4 may be applied for each polarization separately. Such an approach may be taken, if a polarization insensitive platform (e.g. a polarization insensitive silicon platform) is not available, as is the case for most of today's silicon photonics components.

In order to facilitate integration of the POADM and in order to reduce the costs of such an integrated POADM module, it is furthermore proposed to implement the optical gates 306, 406 using silicon photonics technology. As a matter of fact, the modified architectures 300, 400 shown in Figs. 3, 4 enable to take full benefit of the optical integration of the POADM nodes using silicon photonics integration. In particular, the reflectors 307 and the optical gates 306, 406 may be integrated in a cost efficient manner using silicon photonics technology, thereby providing a very cost efficient integrated POADM module having a reduced number of fiber connections. On the other hand, it should be noted that the optical gates 306, 406 implemented using silicon photonics technology typically do not provide any gain to the single wavelength signals on the waveguides 305. However, such gain can be provided by an EDFA at the input and/or output fibers 103, 104.

The use of silicon photonics technology for the design of POADMs is beneficial, as the silicon photonics technology can profit from mature complementary metal-oxide-semiconductor (CMOS) technology with high production volume. Furthermore, the integration of optics and electronics on a same chip allows the enhancement of integrated circuit (IC) performances. In particular, it allows the integration of optical components and electrical components onto a single integrated circuit (as shown e.g. in Fig. 4).

Notably, the use of silicon-on-insulator (SOI) substrates for silicon-based photonics and optoelectronics presents several advantages. SOI is compatible with low-cost CMOS technology, and large wafer diameters up to 300 mm are commercially available. Another advantage is the strong light confinement in submicrometer waveguides due to the large refractive index difference between silicon and buried silicon oxide. As such, the various components of the POADM architectures 300,400 shown in Figs. 3 and 4 may be integrated on SOI substrates. In particular, the optical gates 306, 406 can be implemented using high-speed optical modulators which are integrated in an SOI waveguide 305.

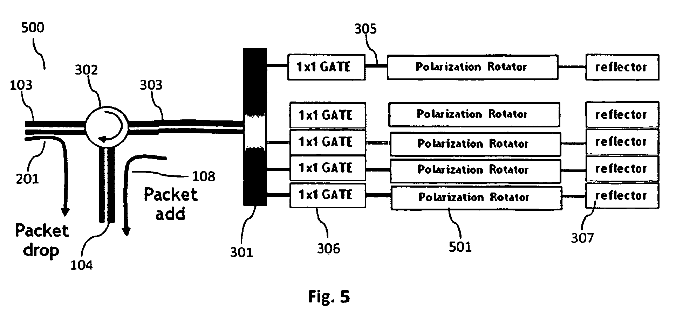

A further architecture for providing a low cost integrated POADM node could be based on the use of discrete and/or low cost components in combination with the use of a polarization or Faraday rotator in order to compensate for the PDL (polarization dependent loss) introduced by the discrete and/or lost cost components (in particular by the optical gates 306, 406). Such a scheme 500 is illustrated in Fig. 5. It should be noted that this scheme can be combined with any of the previously described architectures.

It is assumed that the reflectors 307 perform a rotation of the polarization of the single wavelength signals on the waveguides 305 by *a*, wherein *a* may e.g. be 0° or 180° degrees. In Fig. 5 the polarization rotator 501 turns the polarization of the optical signal by $\pi/4$-*a*/2 (i.e. 45°-*a*/2 degrees) each time the signal passes trough the polarization rotator 501 (on the forward or downstream direction and on the backward or upstream direction). When the signal travels through the gate 306 for the second time (i.e. on the backward direction), the polarization has been rotated by a total of 90° degrees compared to the first passage. As such, any polarization dependent loss incurred by the signal during the first passage occurs to a 90° degree turned version of the signal during the second passage. In that way it is possible to compensate for the polarization dependence of the optical components of the POADM node (notably the optical gate 306).

In the present document, various architectures of integrated POADM nodes have been described. These architectures allow for an efficient and cost effective optical integration of the POADM nodes, thereby enabling the provisioning of optical access and metro networks which can handle bursty traffic in an efficient manner. In particular, the proposed architectures have the advantage that only a reduced number of fiber interfaces (e.g. one fiber pigtail) is required. Furthermore, the integration using a silicon photonics platform enables a high level of integration using an ultra-low cost technology (compared to III-V semiconductors). In addition, the use of reflectors enables the increase of the extinction ratio of the silicon-photonics based optical gates (due to the fact that the signal transits the blocking elements, i.e. the optical gates, twice).

It should be noted that the description and drawings merely illustrate the principles of the proposed methods and systems. It will thus be appreciated that those skilled in the art will be able to devise various arrangements that, although not explicitly described or shown herein, embody the principles of the invention. Furthermore, all examples recited herein are principally intended expressly to be only for pedagogical purposes to aid the reader in understanding the principles of the proposed methods and systems and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof. Finally, it should be noted that any block diagrams herein represent conceptual views of illustrative circuitry embodying the principles of the invention.

**Claims**

1.    A packet optical add drop multiplexer (300, 400, 500), referred to as POADM, comprising

 - a de-multiplexer / multiplexer unit (301), at a first end of the POADM (300, 400, 500), adapted to

  - de-multiplex an optical signal propagating in a first direction from an optical multiple wavelength signal propagating in the first direction; and
  - multiplex an optical signal propagating in a second direction, opposite to the first direction, into an optical multiple wavelength signal propagating in the second direction;

 - a reflector (307), at a second end, opposite the first end, of the POADM (300, 400, 500), adapted to convert the optical signal propagating in the first direction to the optical signal propagating in the second direction; and
 - an optical gate (306, 406), between the de-multiplexer / multiplexer unit (301) and the reflector (307), adapted to erase light within a pre-determined time interval from the optical signals propagating in the first and the second direction.

2.    The POADM (300, 400, 500) of claim 1, wherein the light within the pre-determined time interval that is erased is an optical packet.

3.    The POADM (300, 400, 500) of claim 2, wherein the optical gate (306, 406) is adapted to switch on a per optical packet basis between a first state, where the optical signals traverse the optical gate (306, 406) substantially unmodified, and a second state, where the optical signals are substantially erased.

4.    The POADM (300, 400, 500) of any previous claim, wherein the optical signals comprise a reduced number of wavelengths compared to the multiple wavelength signals.

5.    The POADM (300, 400, 500) of claim 4, wherein the optical signals are single wavelength signals.

6.    The POADM (300, 400, 500) of any previous claim, wherein the multiple wavelength signals are wavelength division multiplex signals.

7.    The POADM (300, 400, 500) of any previous claim, further comprising

- an input/output interface (303), between the first end of the POADM (300, 400, 500) and the de-multiplexer / multiplexer unit (301), adapted to transmit the optical multiple wavelength signals propagating in the first and the second direction.

8. The POADM (300, 400, 500) of any previous claim, further comprising an optical waveguide (305) traversing the optical gate (306), adapted to

   - transmit the optical signal propagating in the first direction from the de-multiplexer / multiplexer unit (301) to the reflector (307); and
   - transmit the optical signal propagating in the second direction from the reflector (307) to the de-multiplexer / multiplexer unit (301).

9. The POADM (300, 400, 500) of any previous claim, wherein

   - the de-multiplexer / multiplexer unit (301), the optical gate (306, 406) and the reflector (307) are integrated on a common chip using silicon photonics technology.

10. The POADM (300, 400, 500) of any previous claim, wherein

   - the de-multiplexer / multiplexer unit (301) is adapted to

     - de-multiplex a plurality of optical signals propagating in the first direction from the optical multiple wavelength signal propagating in the first direction; and
     - multiplex a plurality of optical signals propagating in the second direction into the optical multiple wavelength signal propagating in the second direction;

   - the POADM (300, 400, 500) comprises a corresponding plurality of optical gates (306, 406) and a corresponding plurality of reflectors (307) for the plurality of optical signals.

11. The POADM (300, 400, 500) of any previous claim, wherein

   - the optical gate (406) is a 1 x 2 switch adapted to also decouple a fraction of the optical signals propagating in the first direction and/or propagating in the second direction; and
   - the POADM (300, 400, 500) comprises a receiver (407) adapted to convert the decoupled fraction of the optical signals into an electrical signal.

12. The POADM (300, 400, 500) of any previous claim, further comprising a polarization rotator (501), between the optical gate (306, 406) and the reflector (307), wherein the polarization rotator (501) and the reflector (307) are adapted to rotate an electrical field, such that two polarisation components of the electrical field entering the polarisation rotator (501) in the first direction are exchanged when reflected back through the polarization rotator (501) in the second direction.

13. The POADM (300, 400, 500) of any previous claim, further comprising a circulator (302) adapted to

   - direct the multiple wavelength signal propagating in the first direction from an input fiber (103) to the de-multiplexer / multiplexer unit (301); and
   - direct the multiple wavelength signal propagating in the second direction from the de-multiplexer / multiplexer unit (301) to an output fiber (104).

14. The POADM (300, 400, 500) of claim 13, further comprising

   - an optical coupler (201) adapted to decouple a fraction of the multiple wavelength signal propagating in the first direction from the input fiber (103); and/or
   - an optical coupler (108) adapted to couple light at the pre-determined time interval into the multiple wavelength signal propagating in the second direction on the output fiber (104).

15. The POADM (300, 400, 500) of any of claims 13 to 14, further comprising

   - an optical amplifier adapted to amplify the multiple wavelength signal propagating in the first direction on the input fiber (103); and/or
   - an optical amplifier adapted to amplify the multiple wavelength signal propagating in the second direction on the output fiber (104).

**Patentansprüche**

1. Packet-Optical-Add/Drop-Multiplexer (300, 400, 500, POADM), umfassend:

   - eine Demultiplexer-/Multiplexereinheit (301) an einem ersten Ende des POADM (300, 400, 500), ausgelegt für

     - das Demultiplexen eines optischen Signals, welches sich in eine erste Richtung eines optischen Signals mit verschiedenen Wellenlängen ausbreitet, welches sich seinerseits in erster Richtung ausbreitet; und

- das Multiplexen eines optischen Signals, welches sich in eine zweite, der ersten Richtung entgegengesetzte Richtung ausbreitet, in ein optisches Signal mit verschiedenen Wellenlängen, welches sich seinerseits in zweiter Richtung ausbreitet;

- einen Reflektor (307) an einem zweiten, dem ersten gegenüberliegenden Ende des POADM (300, 400, 500), ausgelegt für das Konvertieren des sich in erster Richtung ausbreitenden optischen Signals in das sich in zweiter Richtung ausbreitende optische Signal; und
- ein optisches Gate (306, 406), zwischen der Demultiplexer /Multiplexereinheit (301) und dem Reflektor (307) gelegen, ausgelegt für das Löschen von Licht innerhalb eines vordefinierten Zeitintervalls der optischen Signale, die sich in erster und zweiter Richtung ausbreiten.

2. Der POADM (300, 400, 500) nach Anspruch 1, wobei das in dem vordefinierten Zeitintervall gelöschte Licht ein optisches Paket ist.

3. Der POADM (300, 400, 500) nach Anspruch 2, wobei das optische Gate (306, 406) ausgelegt für das Umschalten pro optischem Paket zwischen einem ersten Status, in dem die optischen Signale das optische Gate (306, 406) im Wesentlichen unverändert durchlaufen, und einem zweiten Status, in dem die optischen Signale im Wesentlichen gelöscht werden.

4. Der POADM (300, 400, 500) nach einem jeglichen der vorgenannten Ansprüche, wobei die optischen Signale im Vergleich zu den Signalen mit verschiedenen Wellenlängen eine reduzierte Anzahl an Wellenlängen umfassen.

5. Der POADM (300, 400, 500) nach Anspruch 4, wobei die optischen Signale Signale mit einer einzigen Wellenlänge sind.

6. Der POADM (300, 400, 500) nach einem jeglichen der vorgenannten Ansprüche, wobei die Signale mit verschiedenen Wellenlängen wellenlängengemultiplexte Signale sind.

7. Der POADM (300, 400, 500) nach einem jeglichen der vorgenannten Ansprüche, weiterhin umfassend:

- eine Eingangs-/Ausgangs-Schnittstelle (303) zwischen dem ersten Ende des POADM (300, 400, 500) und der Demultiplexer-/Multiplexereinheit (301), ausgelegt für das Übermitteln des sich erster und zweiter Richtung ausbreitenden optischen Signals mit verschiedenen Wellenlängen.

8. Der POADM (300, 400, 500) nach einem jeglichen der vorgenannten Ansprüche, weiterhin einen optischen Wellenleiter (305) umfassend, der das optische Gate (306) durchläuft und ausgelegt ist für

- das Übermitteln des sich in die erste Richtung ausbreitenden, optischen Signals von der Demultiplexer-/Multiplexereinheit (301) zum Reflektor (307); und
- das Übermitteln des sich in zweiter Richtung vom Reflektor (307) zur Demultiplexereinheit (301) ausbreitenden optischen Signals;

9. Der POADM (300, 400, 500) nach einem jeglichen der vorgenannten Ansprüche, wobei

- die Demultiplexer-/Multiplexereinheit (301), das optische Gate (306, 406) und der Reflektor (307) auf einem gemeinsamen Chip mit Silicon Photonics-Technologie integriert sind.

10. Der POADM (300, 400, 500) nach einem jeglichen der vorgenannten Ansprüche, wobei

- die Demultiplexer-/Multiplexereinheit (301) ausgelegt ist für

- das Demultiplexen einer Vielzahl optischer Signale, welche sich in erster Richtung des optischen Signals mit verschiedenen Wellenlängen ausbreiten, welches sich seinerseits in erster Richtung ausbreitet; und
- das Multiplexen einer Vielzahl optischer Signale, welche sich in zweiter Richtung in das optische Signal mit verschiedenen Wellenlängen ausbreiten, welches sich seinerseits zweiter Richtung ausbreitet;

- der POADM (300, 400, 500) eine entsprechende Vielzahl optischer Gates (306, 406) und eine entsprechende Vielzahl von Reflektoren (307) für die Vielzahl optischer Signale umfasst.

11. Der POADM (300, 400, 500) nach einem jeglichen der vorgenannten Ansprüche, wobei

- das optische Gate (406) ein 1x2-Schalter ist, der dafür ausgelegt ist, zudem einen Anteil der sich in die erste und/oder in zweiter Richtung ausbreitenden optischen Signale zu entkoppeln; und
- der POADM (300, 400, 500) einen Empfänger (407) umfasst, der dafür ausgelegt ist, den entkoppelten Anteil der optischen Signale in ein elektrisches Signal umzuwandeln.

**12.** Der POADM (300, 400, 500) nach einem jeglichen der vorgenannten Ansprüche, weiterhin einen Polarisationsdreher (501) zwischen dem optischen Gate (306, 406) und dem Reflektor (307) umfassend, wobei der Polarisationsdreher (501) und der Reflektor dafür ausgelegt sind, ein elektrisches Feld dergestalt zu drehen, dass zwei in erster Richtung beim Polarisationsdreher (501) eingehende Polarisierungskomponenten des elektrischen Felds ausgetauscht werden, wenn sie durch den Polarisationsdreher (501) zurück in die zweite Richtung reflektiert werden.

**13.** Der POADM (300, 400, 500) nach einem jeglichen der vorgenannten Ansprüche, weiterhin einen Zirkulator (302) umfassend, der ausgelegt ist für:

- das Ausrichten des sich in erster Richtung von einer Eingangsfaser (103) zur Demultiplexer-/Multiplexereinheit (301) ausbreitenden Signals mit verschiedenen Wellenlängen;
- das Lenken des sich in zweiter Richtung ausbreitenden Signals mit verschiedenen Wellenlängen von der Demultiplexer-/Multiplexereinheit (301) zu einer Ausgangsfaser (104).

**14.** Der POADM (300, 400, 500) nach Anspruch 13, weiterhin umfassend:

- einen optischen Koppler (201), der ausgelegt ist für das Entkoppeln eines Anteils der sich in erster Richtung von der Eingangsfaser (103) ausbreitenden Signale mit verschiedenen Wellenlängen; und/oder
- einen optischen Koppler (108), der ausgelegt ist für das in dem vordefinierten Zeitintervall erfolgende Koppeln von Licht in das sich in zweiter Richtung auf der Ausgangsfaser (104) ausbreitenden Signal mit verschiedenen Wellenlängen.

**15.** Der POADM (300, 400, 500) nach einem beliebigen der Ansprüche 13 bis 14, weiterhin umfassend:

- einen optischen Verstärker, der ausgelegt ist für das Verstärken der sich in erster Richtung auf der Eingangsfaser (103) ausbreitenden Signale mit verschiedenen Wellenlängen; und/oder
- einen optischen Verstärker, der ausgelegt ist für das Verstärken der sich in zweiter Richtung auf der Ausgangsfaser (104) ausbreitenden Signale mit verschiedenen Wellenlängen.

**Revendications**

**1.** Multiplexeur optique à insertion/extraction de paquets (300, 400, 500), appelé POADM, comprenant

- une unité démultiplexeur/multiplexeur (301), à une première extrémité du POADM (300, 400, 500), adaptée pour

- démultiplexer un signal optique se propageant dans une première direction à partir d'un signal optique à longueurs d'onde multiples se propageant dans la première direction ; et
- multiplexer un signal optique se propageant dans une deuxième direction, opposée à la première direction, en un signal optique à longueurs d'onde multiples se propageant dans la deuxième direction ;

- un réflecteur (307), à une deuxième extrémité, opposée à la première extrémité, du POADM (300, 400, 500), adapté pour convertir le signal optique se propageant dans la première direction en un signal optique se propageant dans la deuxième direction ; et
- une porte optique (306, 406), entre l'unité démultiplexeur/multiplexeur (301) et le réflecteur (307), adaptée pour éliminer la lumière, dans un intervalle de temps prédéterminé, à partir des signaux optiques se propageant dans la première et la deuxième directions.

**2.** POADM (300, 400, 500) selon la revendication 1, dans lequel la lumière dans l'intervalle de temps prédéterminé qui est éliminée est un paquet optique.

**3.** POADM (300, 400, 500) selon la revendication 2, dans lequel la porte optique (306, 406) est adaptée pour commuter, par paquet optique, entre un premier état, où les signaux optiques traversent la porte optique (306, 406) sensiblement non modifiés, et un deuxième état, où les signaux optiques sont sensiblement éliminés.

**4.** POADM (300, 400, 500) selon l'une quelconque des revendications précédentes, dans lequel les signaux optiques comprennent un nombre réduit de longueurs d'onde par rapport aux signaux à longueurs d'onde multiples.

**5.** POADM (300, 400, 500) selon la revendication 4, dans lequel les signaux optiques sont des signaux à longueur d'onde unique.

**6.** POADM (300, 400, 500) selon l'une quelconque des revendications précédentes, dans lequel les signaux à longueurs d'onde multiples sont des signaux à multiplexage par répartition en longueur d'onde.

**7.** POADM (300, 400, 500) selon l'une quelconque des revendications précédentes, comprenant en outre

- une interface d'entrée/sortie (303), entre la première extrémité du POADM (300, 400, 500) et l'unité démultiplexeur/multiplexeur (301), adaptée pour transmettre les signaux optiques à longueurs d'onde multiples se propageant dans la première et la deuxième directions.

8. POADM (300, 400, 500) selon l'une quelconque des revendications précédentes, comprenant en outre un guide d'onde optique (305) traversant la porte optique (306), adapté pour

     - transmettre le signal optique se propageant dans la première direction entre l'unité démultiplexeur/multiplexeur (301) et le réflecteur (307) ; et
     - transmettre le signal optique se propageant dans la deuxième direction entre le réflecteur (307) et l'unité démultiplexeur/multiplexeur (301).

9. POADM (300, 400, 500) selon l'une quelconque des revendications précédentes, dans lequel

     - l'unité démultiplexeur/multiplexeur (301), la porte optique (306, 406) et le réflecteur (307) sont intégrés dans une puce commune en utilisant la technologie photonique en silicium.

10. POADM (300, 400, 500) selon l'une quelconque des revendications précédentes, dans lequel

     - l'unité démultiplexeur/multiplexeur (301) est adaptée pour

         - démultiplexer une pluralité de signaux optiques se propageant dans la première direction à partir du signal optique à longueurs d'onde multiples se propageant dans la première direction ; et
         - multiplexer une pluralité de signaux optiques se propageant dans la deuxième direction en un signal optique à longueurs d'onde multiples se propageant dans la deuxième direction ;

     - le POADM (300, 400, 500) comprend une pluralité correspondante de portes optiques (306, 406) et une pluralité correspondante de réflecteurs (307) pour la pluralité de signaux optiques.

11. POADM (300, 400, 500) selon l'une quelconque des revendications précédentes, dans lequel

     - la porte optique (406) est un commutateur 1x2 adapté pour découpler également une fraction des signaux optiques se propageant dans la première direction et/ou se propageant dans la deuxième direction ; et
- le POADM (300, 400, 500) comprend un récepteur (407) adapté pour convertir la fraction découplée des signaux optiques en un signal électrique.

12. POADM (300, 400, 500) selon l'une quelconque des revendications précédentes, comprenant en outre un rotateur de polarisation (501), entre la porte optique (306, 406) et le réflecteur (307), dans lequel le rotateur de polarisation (501) et le réflecteur (307) sont adaptés pour faire pivoter un champ électrique, de sorte que deux composantes de polarisation du champ électrique entrant dans le rotateur de polarisation (501) dans la première direction soient échangées lorsqu'elles sont renvoyées par réflexion à travers le rotateur de polarisation (501) dans la deuxième direction.

13. POADM (300, 400, 500) selon l'une quelconque des revendications précédentes, comprenant en outre un circulateur (302) adapté pour

     - diriger le signal à longueurs d'onde multiples se propageant dans la première direction entre une fibre d'entrée (103) et l'unité démultiplexeur/multiplexeur (301) ; et
     - diriger le signal à longueurs d'onde multiples se propageant dans la deuxième direction entre l'unité démultiplexeur/multiplexeur (301) et une fibre de sortie (104).

14. POADM (300, 400, 500) selon la revendication 13, comprenant en outre

     - un coupleur optique (201) adapté pour découpler une fraction du signal à longueurs d'onde multiples se propageant dans la première direction à partir de la fibre d'entrée (103) ; et/ou
     - un coupleur optique (108) adapté pour coupler la lumière à l'intervalle de temps prédéterminé dans le signal à longueurs d'onde multiples se propageant dans la deuxième direction sur la fibre de sortie (104).

15. POADM (300, 400, 500) selon l'une quelconque des revendications 13 et 14, comprenant en outre

     - un amplificateur optique adapté pour amplifier le signal à longueurs d'onde multiples se propageant dans la première direction sur la fibre d'entrée (103) ; et/ou
     - un amplificateur optique adapté pour amplifier le signal à longueurs d'onde multiples se propageant dans la deuxième direction sur la fibre de sortie (104).

Fig. 1

Fig. 2

300

103    302    303    Integrated node
305

1x1 GATE    reflector

201    1x1 GATE    reflector
1x1 GATE    reflector
1x1 GATE    reflector
1x1 GATE    reflector

Packet
drop    Packet
add

108

104

301    306    307

**Fig. 3**

400

103    302    303    Integrated node
305

406    1x2 GATE    reflector

Rx    1x2 GATE    reflector
1x2 GATE    reflector
1x2 GATE    reflector
108    1x2 GATE    reflector

104    Packet
add    Packet
add

Rx

301    407    307

Packet drop
(Direct detection)

**Fig. 4**

**Fig. 5**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2006024066 A
- JP 2002319896 A

**Non-patent literature cited in the description**

- Integrated SOA based add-drop multiplexer for WDM optical packet routing with reduced distortion penalty. **ROBERTS et al.** Lasers and Electro-optics. IEEE, 17 May 2004, vol. 1, 883-884